# EUROPÄISCHE PATENTSCHRIFT

(11) **EP 1 444 900 B1**
(45) Veröffentlichungstag und Bekanntmachung des Hinweises auf die Patenterteilung: **14.01.2009**
(21) Anmeldenummer: 04002881.3
(22) Anmeldetag: 10.02.2004
(51) Int. Cl.: A23G 1/00, A23G 1/20

(54) **Verfahren und Vorrichtung zur Herstellung schalenartiger Hohlkörper aus Süßwarenmasse**
Method and apparatus for producing shell-like hollow bodies from a confectionery mass
Procédé et dispositif pour produire des corps creux en forme de coquilles à partir d'une masse de confiserie

(30) Priorität: 10.02.2003 DE 10305301
(43) Veröffentlichungstag der Anmeldung: 11.08.2004
(73) Patentinhaber: CHOCOTECH GmbH, 38855 Wernigerode (DE)
(72) Erfinder: Hochapfel, Birk, 38855 Wernigerode (DE)
(74) Vertreter: Rehberg Hüppe + Partner

(56) Entgegenhaltungen:
- WO-A-98/58547
- WO-A-03/099031
- DE-A1- 4 012 688
- FR-A- 2 604 651
- GB-A- 178 161

## Beschreibung

Die Erfindung betrifft ein Verfahren und eine Vorrichtung zur Herstellung schalenartiger Hohlkörper aus Süßwarenmasse. Die Erfindung lässt sich insbesondere auf die Herstellung schalenartiger, relativ dünnwandiger Hohlkörper aus Schokolademasse anwenden, aber auch auf andere Süßwarenmassen, beispielsweise Karamellmassen, Fondantmassen, Fruchtmassen und dergleichen. Die Erfindung bezieht sich auf die Herstellung solcher schalenartiger Hohlkörper mit einer randoffen gestalteten Öffnung. Solche Hohlkörper stellen in der Regel Zwischenprodukte dar, die mit einer Füllmasse gefüllt, eventuell gedeckelt und oft auch noch überzogen werden. Auf diese Art und Weise entsteht ein verzehrfähiges Produkt, insbesondere eine Praline. Der schalenartige Hohlkörper besitzt in aller Regel einen sich im Wesentlichen bevorzugt radial erstreckenden Boden und eine sich im Wesentlichen bevorzugt vertikal erstreckende Wandung. Die vertikale Wandung ist oft konisch gestaltet. Unter einem solchen schalenartigen Hohlkörper werden aber auch Formkörper in beispielsweise halbkugelförmiger Schalengestalt verstanden. Die Erfindung bezieht sich auf die Herstellung solcher schalenartiger Hohlkörper in einem Tauchverfahren, wobei ein gekühlter Stempel in ein Bad flüssiger temperierter Süßwarenmasse abgesenkt und anschließend über die Oberfläche des Bades wieder angehoben wird. Auf der benetzten Oberfläche des Stempels haftet dabei eine entsprechende Menge Süßwarenmasse aus dem flüssigen Bad und gelangt zur Erstarrung, wobei sich an dem benetzten Teil des Stempels ein schalenartiger Überzug bildet. Die Masse erstarrt dabei von der Oberfläche des Stempels ausgehend radial nach außen und nach innen in die mitgenommene und haftende Süßwarenmasse hinein, wobei dieser Erstarrungsvorgang zeitabhängig abläuft, so dass sich zuletzt auf der freien Oberfläche des Überzugs noch flüssige, zähflüssige oder zumindest teigige Süßwarenmasse befindet. Dieser Überzug wird dann von dem Stempel gelöst und als Hohlkörper abgegeben. Oft erfolgt die Abgabe auf eine Unterlage, insbesondere ein Förderband, mit dessen Hilfe die Hohlkörper einer Weiterbearbeitung oder Weiterverarbeitung, insbesondere Verpackung, zugeführt werden. Eine zur Durchführung des Verfahrens geeignete Vorrichtung besitzt zweckmäßig eine Vielzahl gekühlter Stempel, die gemeinsam in ein Bad flüssiger temperierter Süßwarenmasse eingetaucht werden. Es ist ein steuerbarer Antrieb für eine Vertikalbewegung der Stempel relativ zu dem Bad vorgesehen. Die Kühlung jedes Stempels erfolgt mit Hilfe eines von einem Kühlmedium durchflossenen Kanals, der sich entweder durch den Stempel erstreckt oder zumindest in solcher räumlicher Relativlage zu den Stempeln angeordnet ist, dass die Kühlwirkung die Stempel erreicht, damit diese möglichst konstant auf einer je nach der Art der Süßwarenmasse unterschiedlichen Temperatur gehalten werden können, die zu einer Erstarrung oder Verfestigung der Süßwarenmasse in Form des Überzugs auf dem Stempel führt.

### STAND DER TECHNIK

Ein Verfahren und eine Vorrichtung zur Herstellung schalenartiger Hohlkörper aus Süßwarenmasse ist aus der FR 2 604 651 A1 bekannt. Die Stempel sitzen dabei auf der Unterseite eines Formblocks und werden mit einem gesteuerten Antrieb in vertikaler Richtung in ein Bad flüssiger Süßwarenmasse eingetaucht. Die Süßwarenmasse wird bei der Herstellung von Hohlkörpern aus Schokolademasse über eine Temperiermaschine unter konstanten Eigenschaften gehalten. Insbesondere muss die Temperatur der flüssigen Süßwarenmasse konstant gehalten werden. An den die Stempel haltenden Formblock, der teilweise hohl ausgebildet ist, ist eine Leitung für gekühltes Gas und eine Leitung für Druckluft angeschlossen, die wahlweise mit einem im Formblock vorgesehenen Kanal verbindbar sind. Dieser Kanal im Formblock endet in feinen Öffnungen in der Oberfläche jedes Stempels. Damit soll auch das Lösen der erstarrten Überzüge von den Stempeln erfolgen.

Aus der PCT-Anmeldung mit der Veröffentlichungsnummer WO 98/58547 A1 ist ein ähnliches Tauchverfahren bekannt, mit dem eine Vielzahl von Stempeln, die an einem Formblock sitzen, gemeinsam in ein Schmelzbad abgesenkt und wieder angehoben werden. Auch dabei bildet sich auf der benetzten Oberfläche der Stempel je ein Überzug. Der Formblock bzw. die Stempel sind hier mit zwei voneinander getrennten Kanälen ausgebildet. Die Kühlung der Formen erfolgt durch Zirkulation eines Kühlmittels in einem ersten geschlossenen Kreislauf. Das Ablösen der Überzüge von den Stempeln erfolgt mit Hilfe eines anderen Mediums und einem davon getrennten zweiten Versorgungskreislauf. Nur dieser zweite Kreislauf besitzt in der Oberfläche des Stempels endende Öffnungen. Durch die beiden getrennten Kanäle für die Kühlung einerseits und für das Ablösen andererseits besteht die Möglichkeit, diese beiden Funktionen zeitlich unabhängig voneinander zu steuern. So kann beispielsweise die Kühlflüssigkeit kontinuierlich zirkulierend angewendet werden, während das Ablösen der Überzüge von den Stempeln taktweise erfolgt.

Solche schalenartigen Hohlkörper der hier angesprochenen Art stellen empfindliche Halb- oder Fertigprodukte dar, insbesondere wenn sie eine relativ dünne Wanddicke besitzen, wie es für das angesprochene Tauchverfahren typisch ist. Das Erstarren bzw. Verfestigen der an der benetzten Oberfläche der Stempel haftenden Süßwarenmasse ist ein Vorgang, der in starkem Maße von der Art der Süßwarenmasse und deren Eigenschaften, insbesondere der Temperatur der Süßwarenmasse im Tauchbad sowie der Oberflächentemperatur der Stempel, abhängig ist. Die Verfestigung verläuft zudem an verschiedenen Stellen des Überzugs in unterschiedlicher Weise. Dabei bildet sich der Rand des schalenartigen Hohlkörpers relativ dünnwandig aus und führt zu einer beschleunigten Erstarrung, während die Süßwarenmasse beispielsweise im Bodenbereich eine vergleichsweise größere Wanddicke annimmt, deren Verfestigung einen größeren Zeitraum beansprucht. Die gesamte innere Oberfläche des schalenartigen Hohlkörpers haftet an der entsprechenden Oberfläche des Stempels, muss aber von dieser gelöst werden. Das Ablösen der mehr oder weniger verfestigten Überzüge von den Stempeln zur Bildung der Hohlkörper bereitet Schwierigkeiten. Beim Einsatz von Druckluft für die Lösebewegung wirkt diese nur auf einen Teil des Überzugs ein, jedoch muss dabei die Haftung über die gesamte Kontaktfläche zwischen Überzug und Stempel aufgehoben werden. Insbesondere bei Überzügen, die einen ausgeprägten Boden in radialer Richtung und eine ausgeprägte Wandung in axialer Richtung besitzen, müssen die Öffnungen für das Ausströmen der Druckluft im Bereich des Bodens angeordnet sein, da die zylindrische oder leicht konische Wandung nicht verformt werden darf. Dabei besteht die Gefahr, dass der Überzug durch die Druckluft nicht vollständig von dem Stempel gelöst wird, sondern ein- und durchreißt. Dies führt dann nicht nur zu Ausschuss, sondern auch zu Betriebsunterbrechungen, da die am Stempel haftenden Teile des Überzugs mühsam entfernt werden müssen. Die Haftungskräfte im Bereich eines angenähert zylindrischen Wandteils können bedingt durch die Gestalt des Hohlkörpers und/oder die Art der Masse relativ groß im Vergleich zu den Haftungskräften werden, die sich im Bereich des Bodens auswirken. Durch die Anwendung von Druckluft im Bodenbereich kann dabei ein partielles Lösen und Aufblähen des Bodens des Überzugs relativ zu der weiterhin am Stempel haftenden Wandung erfolgen, wodurch nicht nur der Boden des Hohlkörpers in unerwünschter Weise verformt, sondern vor allen Dingen das Lösen des Überzugs nicht erreicht wird.

Zwar ist es aus der DE 29 14 281 A1 bei der Herstellung von Schokoladeformteilen bekannt, temperierte schmelzflüssige Schokolademasse in eine allseits geschlossene Form unter hohem Druck einzuspritzen, bis der Hohlraum vollständig gefüllt ist. Die Form wird durch Kühlung etwa auf Raumtemperatur gebracht, so dass damit die massiven Schokoladeformkörper oder auch vergleichsweise dickwandige Schokoladehohlkörper herstellbar sind. Die allseits geschlossene Form wird von einem Oberteil und einem Unterteil gebildet, wobei im Oberteil Vorsprünge und im Unterteil Vertiefungen vorgesehen sind, so dass durch die erstarrende Schokolademasse Haftungskräfte sowohl zwischen der Innenwandung des napfartigen Schokoladehohlkörpers zu dem Oberteil der Form wie auch der Außenwandung des Schokoladehohlkörpers zu dem Unterteil der Form bzw. zu einer in die Form eingelegten Platte entstehen. Dieser geschlossenen Form mit Ihren Vorsprüngen und Vertiefungen wird ein Auswerfer zugeordnet, der zu den Formteilen axial beweglich angeordnet ist. Beim Öffnen der Form verbleibt der Auswerfer zunächst am erstarrten Schokoladeformteil. Nach dem Zurückziehen des Auswerfers kann die Platte mit den darin enthaltenen Schokoladeformteilen entnommen und zur Endkühlung weitertransportiert werden. Der Auswerfer endet mit seiner Oberfläche zwar auch in der Oberfläche des napf- oder trogartigen Schokoladehohlkörpers. Jedoch kontaktiert die sehr kleine Oberfläche des Auswerfers nur einen Bruchteil der gesamten Oberfläche des Schokoladehohlkörpers.

Aus der DE 40 12 688 A1 ist eine Form für Konfektmasse zur Herstellung von massiven Formkörpern aus insbesondere Weichkonfekt bekannt. Dabei wird die flüssige Konfektmasse in eine einteilige, oben offene Formmulde eingefüllt, in der sie während des Erstarrens verbleibt. Zum Ausformen der Formkörper wird die Formmulde zunächst umgekehrt. Im Zentrum der Formmulde ist ein Auswerfer axial beweglich angeordnet, der zusammen mit der Formmulde zugleich ein Ventil bildet, durch welches in geöffnetem Zustand Luft zum Einströmen zwischen Formmulde und Formkörper gebracht wird. Dadurch wird die gesamte Haftungskraft zwischen dem Formkörper und der Formmulde aufgehoben und der Formkörper aus der Formmulde nach unten ausgeworfen.

Im allgemeinen dienen Auswerfer dazu, einen erstarrten Formkörper durch Kraftangriff an einer relativ kleinen Fläche insgesamt aus der Form zu lösen und auszuwerfen, also praktisch die gesamte Haftungskraft zwischen Formkörper und Form auf einmal und vollständig aufzuheben. Bei der Herstellung schalenartiger, also empfindlicher, relativ dünnwandiger Hohlkörper aus Schokolademasse verbietet sich für einen Fachmann die Zuordnung eines Auswerfers zu einem Tauchstempel, weil dabei die Gefahr besteht, dass der als Überzug an dem Stempel hängende Hohlkörper durch einen Auswerfer eingerissen oder durchstanzt wird, so dass im Tauchverfahren hergestellte schalenartige Hohlkörper mit einem Auswerfer nicht entformt werden können.

### AUFGABE DER ERFINDUNG

Der Erfindung liegt daher die Aufgabe zugrunde, das Lösen des Überzugs von dem Stempel bei im Tauchverfahren herzustellenden Hohlkörpern aus besonders empfindlichen Süßwarenmassen, insbesondere solchen mit geringer Wanddicke, zu verbessern, so dass solche Hohlkörper auch mit hoher Zuverlässigkeit hergestellt werden können.

### LÖSUNG

Erfindungsgemäß wird dies bei einem Verfahren der eingangs beschriebenen Art dadurch erreicht, dass ein im Bereich des sich bildenden Überzugs mindestens in zwei Teilstempel geteilter Stempel in einer ersten Relativlage seiner Teilstempel in das Bad abgesenkt und angehoben wird, und dass zum teilweisen Lösen des mindestens teilweise verfestigten Überzugs von dem Stempel die Teilstempel relativ zueinander in eine zweite Relativlage bewegt werden, wobei zunächst die Haftung des Überzuges nur zu einem der Teilstempel und zeitversetzt zu dem anderen der Teilstempel aufgehoben wird.

### BESCHREIBUNG DER ERFINDUNG

Die Erfindung geht von dem Gedanken aus, den einzelnen Stempel mehrteilig zu gestalten und damit in mindestens zwei Teilstempel zu unterteilen. Die Unterteilung in die Teilstempel erfolgt so, dass die Kontaktfläche des Stempels und des Überzugs in Teilflächen unterteilt wird und die Haftungskräfte zwischen dem Überzug und dem Stempel in diesen Teilflächen nacheinander aufgehoben werden, wodurch sich die bei den verschiedenen Schritten des Lösevorgangs zu überwindenden Kräfte grundsätzlich aufteilen und damit für jeden einzelnen Schritt verkleinern. Die Unterteilung des Stempels in Teilstempel erfolgt dabei so, dass eine Teilungsfuge geschaffen wird, die im Bereich der Oberfläche des Stempels endet. Die Teilungsfuge ist je nach Gestalt des herzustellenden Hohlkörpers und den Eigenschaften der jeweiligen Süßwarenmasse abgestimmt angeordnet. Dabei kann die Anordnung so getroffen sein, dass an den Teilstempeln zumindest etwa gleichgroße Flächenbereiche zeitlich nacheinander gelöst werden, so dass der Gesamtlösevorgang insgesamt zuverlässiger und damit besser reproduzierbar wird. In der einfachsten Ausführungsform wird der Stempel in nur zwei Teilstempel unterteilt. Oft reicht eine solche Unterteilung bereits aus. Bei kompliziert gestalteten Hohlkörpern kann es aber durchaus sinnvoll sein, unter Vergrößerung des mechanischen Aufwands eine Unterteilung in drei und mehr Teilstempel anzuwenden. Die einzelnen Teilstempel müssen zum teilweisen bzw. bereichsweisen Lösen des Überzugs relativ zueinander bewegt werden, um die Haftung des Überzugs in dem entsprechenden Bereich zu einem der Teilstempel aufzuheben. Anschließend kann das Ablösen im Bereich des anderen Teilstempels erfolgen. Auf diese Art und Weise werden sowohl die Flächen wie auch die Kräfte aufgeteilt. Das Lösen des Überzugs von dem Stempel erfolgt in Schritten nacheinander bereichsweise. Dabei ergibt sich eine große Freiheit der Variationsmöglichkeiten, abgestimmt auf die Gestalt des jeweiligen Hohlkörpers und die Eigenschaften der eingesetzten Süßwarenmasse. So kann beispielsweise das Lösen zunächst im Bereich des Bodens und erst dann im Bereich einer etwa zylindrisch verlaufenden Wandung oder aber auch umgekehrt erfolgen. Das bereichsweise Lösen kann somit zeitlich voneinander getrennt und auch auf den Ablauf der Erstarrung der Süßwarenmasse besser abgestimmt erfolgen. Dickwandige Bereiche, die länger flüssig bzw. teigig bleiben, bevor sie durchhärten, werden in einem vergleichsweise später durchzuführenden Schritt gelöst. Die beiden Teilstempel in der einfachsten Ausführungsform müssten zwei unterschiedliche Relativlagen zueinander einnehmen können. In einer ersten Relativlage sind die beiden Teilstempel so aneinander angenähert, dass sie zusammen eine gewünschte kontinuierlich verlaufende Oberfläche für den Überzug bzw. den Hohlkörper bilden, die der Formgebung entlang der Innenwandung entspricht. In einer zweiten Relativlage, die sich von der ersten Relativlage unterscheidet, sind die beiden Teilstempel vorzugsweise axial gegeneinander verschoben. Diese zweite Relativlage wird erreicht, indem sich der Überzug von einem der Teilstempel löst.

Zum teilweisen Lösen des Überzugs von dem Stempel kann ein unter Druck stehendes Gas in der betreffenden Oberfläche des Teilstempels zur Ausströmung gebracht werden. In der Regel wird es sich dabei um den Lösevorgang handeln, der nachfolgend zu einer ersten bereichsweisen Lösung dann zum vollständigen Lösen des Überzugs zu dem Hohlkörper von dem Stempel erfolgt. Es ist aber auch möglich, die Anwendung des unter Druck stehenden Gases nur als einen Zwischenschritt zu benutzen, bei dem nur ein Teil der Kontaktfläche des Überzugs gelöst wird. Ein Wiederanlegen an dem betreffenden Teilstempel ist für den nachfolgenden vollständigen Lösevorgang nicht nachteilig. Es ist aber auch möglich, den gesamten Lösevorgang in mehreren Schritten ohne Einsatz eines unter Druck stehenden Gases durchzuführen, indem ausschließlich die Teilstempel relativ zueinander bewegt werden. Die Bewegung dieser Teilstempel erfolgt vorzugsweise in axialer bzw. vertikaler Richtung.

Sinnvoll ist es, wenn der Stempel mit dem Überzug auf eine Unterlage abgesenkt wird, aus dieser Stellung der dem Randbereich des Hohlkörpers zugeordnete Teilstempel angehoben wird, und das vollständige Lösen des Überzugs von dem Stempel unter Gegendruck der Unterlage erfolgt. Dies gilt insbesondere dann, wenn bei einem Schritt des Lösevorgangs ein unter Druck stehendes Gas, z.B. Druckluft, Verwendung findet. Dies ist dann besonders bedeutsam, wenn, wie für eine wirtschaftliche Herstellung erforderlich, eine Vielzahl von Stempeln gleichzeitig gehandhabt werden müssen und damit auch gleichzeitig in das Bad abgesenkt und wieder angehoben werden. Dann ergibt sich die Schwierigkeit, beispielsweise bei der Anordnung von 10 x 10 Stempeln in einem Feld an einem Formblock sämtliche Überzüge von sämtlichen Stempeln zu lösen, damit diese für den nächsten Arbeitstakt wieder zur Verfügung stehen. Die gleichmäßige Aufteilung eines oder mehrerer Druckluftimpulse auf die einzelnen Stempel lässt sich über eine längere Zeitspanne dann aufrechterhalten bzw. erreichen, wenn ein Gegendruck der Unterlage dabei genutzt wird. wobei teilweise oder ganz von ihren Stempeln gelöste Überzüge noch für eine gewisse Zeitspanne in Kontakt zu ihren Stempeln gehalten werden. Dabei wird das Ausströmen von Druckluft an diesen Stempeln gedrosselt. Ein unverminderter Druckaufbau kann dann auch an den noch nicht gelösten Überzügen in dem Feld der Stempel erfolgen. Dabei können sich auch geringfügig unterschiedliche Verfestigungen der Überzugsmassen an den einzelnen Stempeln zueinander derart auswirken, dass geringfügig voneinander abweichende Haftungskräfte zwischen den Überzügen und den Stempeln entstehen, so dass das Lösen einzelner Überzüge in einem Stempelfeld zeitlich nacheinander erfolgt. Dabei verursachen die freigegebenen Öffnungen der Luftkanäle an den Stempeln, die sich bereits gelöst haben, einen Druckabfall, der sich auch auf die anderen Stempel auswirkt. Damit entstehen gerade an den Stempeln, an denen der Überzug noch nicht gelöst worden ist, verringerte Lösekräfte, obwohl zum Lösen des Überzugs dort vergleichsweise erhöhte Lösekräfte erforderlich sein können. Um diesem Problem zu begegnen, ist es also sinnvoll, die Unterlage, auf die die Hohlkörper abzusetzen sind, unter Gegendruck gegen die Stempel über eine gewisse Zeitspanne zu halten, damit das Ausströmen von Druckluft und der dadurch verursachte Druckabfall behindert wird. Dies wirkt sich vorteilhaft auf das Lösen der noch nicht gelösten Überzüge aus. Dabei ist es sinnvoll, zunächst durch eine Relativbewegung die Haftungskräfte im Wandbereich des Hohlkörpers aufzuheben und den Bodenbereich der Hohlkörper nachfolgend zu lösen.

Eine auch zur Durchführung des Verfahrens geeignete Vorrichtung kennzeichnet sich erfindungsgemäß dadurch, dass jeder Stempel in mindestes zwei Teilstempel unterteilt ist, und dass eine Einrichtung zur Bewegung der mindestens zwei Teilstempel aus einer ersten Relativlage in eine zweite Relativlage und zurück vorgesehen ist.

Die Erfindung löst sich damit von der einteiligen Ausbildung der Stempel, die in ein Bad flüssiger Süßwarenmasse eingetaucht werden. Die Stempel sind so unterteilt, dass sich die benetzte Oberfläche für die Bildung des Überzugs aus Oberflächen beider Teilstempel zusammensetzt. Durch eine Einrichtung zur Bewegung der mindestens zwei Teilstempel relativ zueinander erfolgt das bereichsweise Ablösen des Überzugs von dem einen Teilstempel und dann von dem anderen Teilstempel. Entsprechendes gilt, wenn die Unterteilung jedes Stempels in mehr als zwei Teilstempel angewendet wird. Für die Ausbildung der Einrichtung zur Bewegung der mindestens zwei Teilstempel aus einer ersten Relativlage in eine zweite Relativlage und umgekehrt ergeben sich verschiedene Möglichkeiten. Es kann hier ein gesonderter Antrieb vorgesehen sein. Es ist aber auch möglich, den Antrieb für die Vertikalbewegung des Stempels zum Eintauchen in das Bad und zum Herausführen der Stempel in eine Position oberhalb des Badspiegels zu nutzen und die Bewegung davon abzuleiten bzw. abzugreifen. Freilich ist es erforderlich, die Bewegung, also den Hub zum Erreichen der jeweiligen Relativlagen auf die Anwendungsfälle abzustimmen. Die Ablösung in einzelnen Teilbereichen an den Teilstempeln kann durch reine Relativbewegung der Teilstempel zueinander erreicht werden. Die Anwendung eines gesonderten Luftkanals mit entsprechender Steuerung ist nicht unbedingt erforderlich. Gleichwohl kann es für einzelne Anwendungsfälle vorteilhaft sein, in einem der Teilstempel ein in seiner dem Überzug zugeordneten Oberfläche endenden Kanal vorzusehen, der zum Zwecke der Teillösung des Überzugs von dem Teilstempel mit einem unter Druck stehenden Gas, insbesondere Druckluft, beaufschlagbar ist. Es versteht sich, dass diese Beaufschlagung taktweise zu einem Zeitpunkt erfolgt, zu dem der betreffende Lösevorgang gewünscht wird.

An den Teilstempeln können die Relativbewegungen begrenzende Anschläge vorgesehen sein, insbesondere solche Anschläge, die die erste Relativlage der Teilstempel zueinander begrenzen, in der sich die Teilstempel in einer solchen Lage befinden, dass ihre zusammengesetzte äußere Kontur der inneren Kontur des herzustellenden Hohlkörpers entspricht. Man kann aber auch ohne solche Anschläge auskommen und die Hübe der Teilstempel zueinander durch andere Mittel begrenzen, steuern oder einstellbar gestalten, wie es für die Gestalt des jeweiligen Hohlkörpers erforderlich ist.

Sinnvoll kann es sein, wenn der Stempel mit einer im Übergangsbereich zwischen einem Boden und einer Wandung des Überzugs angeordneten Teilungsfuge in zwei Teilstempel unterteilt ist. Die Teilungsfuge muss eng bemessen sein, damit in der einen Relativlage keine Süßwarenmasse eindringen kann. Die Teilungsfuge kann sich radial oder axial oder in einer davon abweichenden Richtung erstrecken. Ihre Lage und Anordnung ist auf die Bewegung abgestimmt.

Jeder Stempel kann in mindestens zwei Teilstempel derart unterteilt sein, dass die Teilstempel durch die Einrichtung in vertikaler Richtung zueinander relativbeweglich sind. Dies stellt die einfachste Realisierungsmöglichkeit dar, die ohne größeren Aufwand erreichbar ist.

Es kann eine federnd nachgiebige Unterlage zum Lösen der Überzüge bzw. der Hohlkörper von den Stempeln und zu ihrer Aufnahme vorgesehen sein. Eine solche Unterlage kann beispielsweise aus einem angetriebenen Förderband bestehen, welches im Mittelbereich federnd nachgiebig gelagert ist. Damit wird gleichsam ein Federkissen geschaffen, mit dem ein Gegendruck aufgebaut wird, um die Überzüge nach Teilablösung in einer solchen Relativlage zu halten, in der das freie Ausströmen von Druckluft behindert ist. Der steuerbare Antrieb für die Vertikalbewegung der Stempel kann relativ zu dem Bad flüssiger temperierter Süßwarenmasse auch für die Vertikalbewegung der Teilstempel relativ zu der Unterlage ausgebildet sein. Auch hier ergeben sich einfache Ausführungsformen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform der Vorrichtung mit einem in zwei Teilstempel unterteilten Stempel in einer ersten Relativlage.
- **Fig. 2**: zeigt die Vorrichtung gemäß Fig. 1 in einer zweiten Relativlage ihrer Teilstempel.
- **Fig. 3**: zeigt einen Querschnitt durch eine weitere Ausführungsform der Vorrichtung, bei der jeder Stempel ebenfalls in zwei Teilstempel unterteilt ist, und zwar wiederum die erste Relativlage.
- **Fig. 4**: zeigt die zu der Vorrichtung gemäß Fig. 3 gehörige zweite Relativlage der Teilstempel zueinander.
- **Fig. 5**: zeigt eine dritte Ausführungsform der Vorrichtung mit einem in zwei Teilstempel unterteilten Stempel in einer ersten Relativlage.
- **Fig. 6**: zeigt die andere Relativlage der Teilstempel der Ausführungsform gemäß Fig. 5.
- **Fig. 7**: zeigt die Ausführungsform der Fig. 5 und 6 in einer weiteren Bewegungsphase.
- **Fig. 8**: zeigt die Ausführungsform der Vorrichtung gemäß den Fig. 5 bis 7 kurz vor dem endgültigen Absetzen eines Hohlkörpers auf eine Unterlage.

### FIGURENBESCHREIBUNG

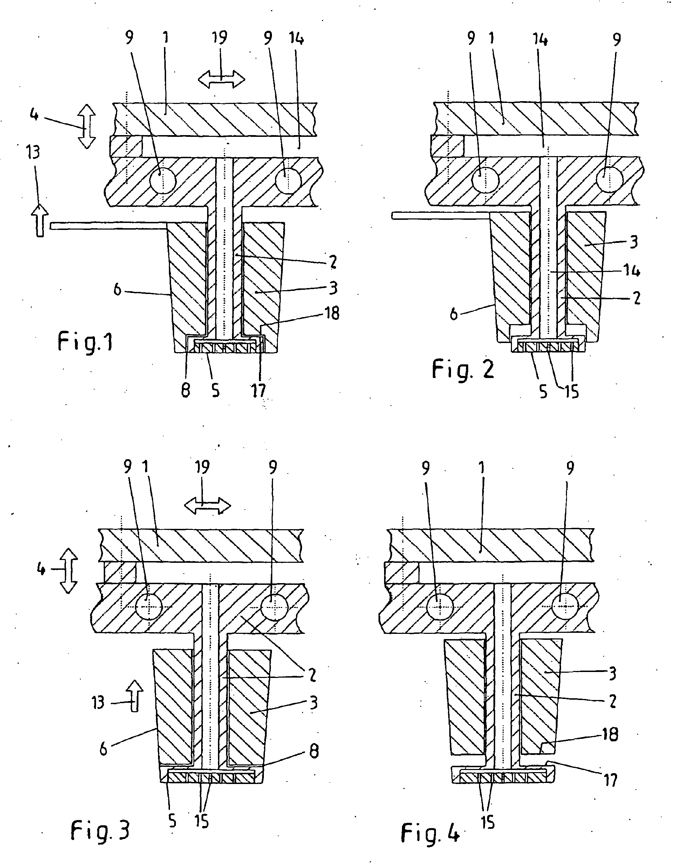

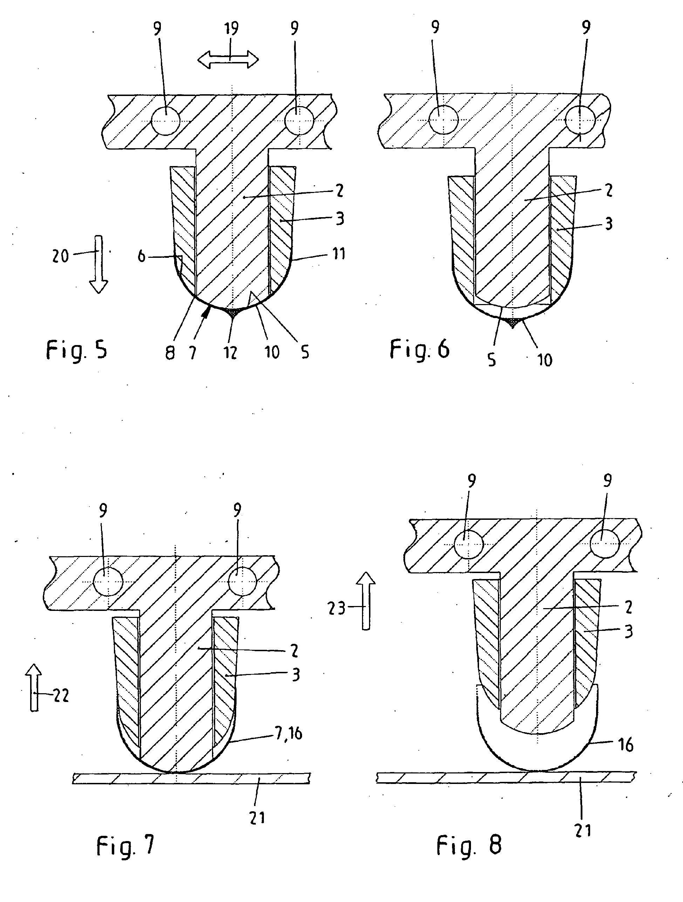

In den Zeichnungen sind die Elemente der Vorrichtung nur insoweit dargestellt, wie sie für das Verständnis der Erfindung erforderlich sind. Die Fig. 1 und 2 zeigen eine erste Ausführungsform. Es ist ein Formblock 1 vorgesehen, der einen innenliegenden Teilstempel 2 trägt, der von einem außenliegenden Teilstempel 3 umgeben ist. Die beiden Teilstempel 2 und 3 bilden einen Stempel 2; 3, mit dessen Hilfe im Tauchverfahren schalenartige Hohlkörper herstellbar sind. Dabei wird der Stempel 2; 3 in ein Bad flüssiger Süßwarenmasse gezielt abgesenkt und über den Badspiegel wieder angehoben. Dies geschieht mit einem nicht dargestellten Antrieb entsprechend dem Doppelpfeil 4. Entsprechend der Eintauchtiefe bildet sich dabei an einer Oberfläche 5 des Teilstempels 2 und an einer Oberfläche 6 ein gemeinsamer zusammenhängender Überzug 7, wie er beispielsweise in Fig. 5 dargestellt ist.

Der Überzug 7 ist bei den Ausführungsbeispielen der Fig. 1 bis 4 aus Gründen der Klarheit und Übersichtlichkeit der Zeichnungen weggelassen. Der Überzug 7 überbrückt dabei auch eine Teilungsfuge 8. Die Teilungsfuge 8 ist derart eng bemessen, dass beim Eintauchen des Stempels 2; 3 in die Teilungsfuge 8 keine Süßwarenmasse eintritt.

Der Teilstempel 2 ist mit dem Formblock 1 verbunden. Der Teilstempel 2 oder auch der Formblock wird von einem Kanal 9 durchsetzt, der an einen Kreislauf für Temperiermedium, insbesondere Kühlwasser, angeschlossen ist. Mit Hilfe dieses Temperierkreislaufs wird die Temperatur der Oberflächen 5 und 6 auf eine an die Art der Süßwarenmasse angepasste Temperatur eingestellt, die letztlich zu einer Verfestigung von Süßwarenmasse führt, die nach dem Absenken und Wiederanheben des Stempels 2; 3 in und aus dem Bad der Süßwarenmasse hängen bleibt. Auf diese Art und Weise wird der in Fig. 5 beispielhaft verdeutlichte Überzug 7 gebildet. Ein solcher Überzug 7 weist einen Boden 10 und eine Wandung 11 auf. Während sich die Wandung 11 mehr oder weniger zylindrisch oder leicht konisch erstreckt, kann der Boden 10 ebene flächige Gestalt (Fig. 1 bis 4) oder auch die Form einer Tonne oder eines Kugelabschnittes besitzen, wie dies die Fig. 5 bis 8 zeigen. Oft bildet sich im Bereich des Bodens 10 ein Tropfen 12 (Fig. 5), der zeitversetzt zu der inneren Wandung 11 des Überzugs 7 erstarrt.

Es bereitet Probleme, einen solchen Überzug 7 nach seiner Erstarrung oder Verfestigung von dem Stempel zu lösen, insbesondere wenn dieser, wie im Stand der Technik, einteilig bzw. einstückig ausgebildet ist. Das Ausführungsbeispiel der Fig. 1 und 2 lässt erkennen, dass der Teilstempel 3 relativ zu dem Teilstempel 2 gemäß Pfeil 13 vertikal verfahrbar ist. Der Relativhub ergibt sich bei Vergleich der Fig. 1 und 2. Die beiden Teilstempel 2 und 3 können mit Hilfe eines nicht näher dargestellten Antriebs in eine erste Relativlage gemäß Fig. 1 verfahren werden. In dieser ersten Relativlage erfolgt das Absenken und Wiederanheben des Stempels in bzw. aus dem Bad der Süßwarenmasse und die Bildung des Überzugs 7 auf der gemeinsamen durchgehenden Oberfläche 5, 6. Die Teilstempel 2 und 3 können aber auch in eine zweite Relativlage verfahren werden, wie sie in Fig. 2 dargestellt ist. Hier ist die Ausbildung so getroffen, dass der Teilstempel 3 gegenüber dem Teilstempel 2 vergleichsweise angehoben wird. Durch diesen Anhebevorgang löst sich der erstarrte bzw. verfestigte Überzug 7 von der Oberfläche 6 des Teilstempels 3 ab und haftet nur noch auf der Oberfläche 5 des Teilstempels 2. Während dieses ersten Schrittes der Ablösung, die nur den Oberflächenbereich des Teilstempels 3 erfasst, erfolgt die Überwindung der Haftungskräfte nur über einen Teil der inneren Oberfläche des Überzugs 7. Der Teilstempel 2 ist von einem weiteren Kanal 14 durchzogen, der auch Bereiche des Formblocks 1 durchsetzen kann. Der Kanal 14 endet in der Oberfläche 5 in feinen Austrittsöffnungen 15. Der Kanal 14 kann taktweise an eine Quelle für unter Druck stehendes Gas, insbesondere Druckluft, angeschlossen werden, wobei der Druckluftimpuls in der Relativlage der Teilstempel 2 und 3 gemäß Fig. 2 erzeugt wird. Dies führt dann dazu, dass das Lösen des Überzugs 7 in einem zweiten Schritt allein von der Oberfläche 5 des Teilstempels 2 erfolgt.

Durch die Aufteilung eines gemeinsamen Stempels in die beiden Teilstempel 2 und 3 und damit auch die Oberflächen 5 und 6 erfolgt eine Aufteilung der zu lösenden Flächenbereiche und auch eine Aufteilung der Gesamtlösekraft. Damit werden die aufzuwendenden Kräfte grundsätzlich geringer und es können auch sehr empfindliche Überzüge 7 letztlich als Hohlkörper 16 (Fig. 8) abgelöst und weiterverarbeitet werden. Es ist erkennbar, dass die Lage der Teilungsfuge 8 je nach der Gestalt des zu erzeugenden Überzugs 7 bzw. Hohlkörpers 16 im Bereich des Bodens 10 (Fig. 1 und 2) oder auch im Bereich der Wandung 11 (Fig. 3 und 4) erfolgen kann. Dies richtet sich nach der Entformbarkeit und der Empfindlichkeit sowie Gestalt des jeweiligen Hohlkörpers 16. Es ist auch leicht vorstellbar, dass die Unterteilung eines Stempels in mehr als zwei Teilstempel ohne weiteres möglich ist, um die zum Lösen erforderlichen Kräfte weiter zu verringern und jeweils nur Teilbereiche des Überzugs 7 schrittweise zu lösen.

Es versteht sich weiterhin, dass an einem Formblock 1 nicht nur ein Stempel 2; 3 befestigt ist, sondern zumeist ein ganzes Feld von Stempeln. Dabei können durchaus auch z. B. 10x10 Stempel an einem Formblock vorgesehen sein.

Es besteht die Möglichkeit, die eine Relativlage, die in Fig. 1 dargestellt ist, durch Anschläge 17 und 18 aneinander zu sichern. Auch die andere Relativlage gemäß Fig. 3 kann durch solche Anschläge (nicht dargestellt) begrenzt werden. Das gesamte Feld der Stempel ist mit dem Formblock 1 über einen weiteren nicht dargestellten Antrieb in Richtung eines Doppelpfeils 19 horizontal verschiebbar bzw. verfahrbar, wie es für eine Verfestigung oder Erstarrung der Süßwarenmasse in Form der Überzüge 7 an der Vielzahl von Stempeln erforderlich oder sinnvoll ist, bis jeweils eine Lösestellung erreicht ist, in der die Überzüge schrittweise, wie beschrieben, gelöst und als Hohlkörper 16 abgegeben werden.

Bezüglich des Ausführungsbeispiels der Fig. 3 und 4 kann auf die Beschreibung des Ausführungsbeispiels der Fig. 1 und 2 verwiesen werden. Lediglich die Teilungsfuge 8 ist hier an anderer Stelle, nämlich im Bereich der Wandung 11 des Überzugs 7, angeordnet. Dies empfiehlt sich für Gestaltungen von Hohlkörpern 16, bei denen die Haftkraft im Bereich der Wandung 11 besonders groß ist. Auch hier erfolgt das Lösen in zwei Schritten. In einem ersten Schritt, der durch das Anfahren der in Fig. 4 dargestellten zweiten Relativlage aus der ersten Relativlage gemäß Fig. 3 heraus erreicht wird, erfolgt das Ablösen des Überzugs 7 von der Oberfläche 6 des Teilstempels 3. In einem zweiten Löseschritt, der durch einen Druckluftimpuls durch den Kanal 14 eingeleitet wird, erfolgt das Lösen des Überzugs 7 im Bereich des Bodens 10, d. h. von der Oberfläche 5.

In den Fig. 5 bis 8 ist ein weiteres Ausführungsbeispiel schematisch verdeutlicht. Es sind hier nur die beiden Teilstempel 2 und 3 dargestellt. Der Formblock ist nicht dargestellt. Der Teilstempel 2 besitzt zwar einen Kanal 9, aber keinen Kanal 14. Auch die Anschläge 17 und 18 der Ausführungsbeispiele der Fig. 1 bis 4 kommen hier in Fortfall. Fig. 5 zeigt die erste Relativlage zwischen den Teilstempeln 2 und 3, in der auch das Tauchverfahren in dem Bad flüssiger Süßwarenmasse durchgeführt wird. Es ist hier der Überzug 7 angedeutet, der sich nach dem Wiederanheben der Stempel bildet. In einem ersten Schritt wird der Teilstempel 3 beim Übergang der Stellung aus Fig. 5 in die Fig. 6 gemäß Pfeil 20 relativ zum Teilstempel 2 abgesenkt, wobei das von der Teilungsfuge 8 eingeschlossene Stück des Bodens 10 des Überzugs 7 von der Oberfläche 5 freikommt. Sodann wird der Teilstempel 3 aus der in Fig. 6 dargestellten zweiten Relativlage wieder angehoben. Es stellt sich eine Relativlage ein, die der in Fig. 5 dargestellten Ausgangslage entspricht, wobei nunmehr die Haftung im Bereich des Bodens aufgehoben bleibt, obwohl sich die Oberfläche 5 von innen wiederum an den Boden 10 anlegt. In dieser Stellung werden die beiden Teilstempel 2 und 3 gemeinsam in Richtung auf eine Unterlage 21 abgesenkt. Dabei oder zeitverzögert dazu wird der Teilstempel 3 relativ zu dem Teilstempel 2 noch weiter gemäß Pfeil 22 angehoben, so dass die Stellung gemäß Fig. 7 erreicht wird. Während dieser Bewegung löst sich die Wandung 11 von der Oberfläche 6 des Teilstempels 3, so dass der nunmehr gelöste Überzug 7 als Hohlkörper 16 auf der Unterlage 21 (Fig. 8) abgesetzt wird, während die beiden Teilstempel 2 und 3 gemäß Pfeil 23 angehoben werden. Anschließend werden die beiden Teilstempel 2 und 3 wiederum in die in Fig. 6 dargestellte erste Relativlage gebracht und sind daher einsatzbereit für die Wiederholung des Tauchverfahrens.

Anhand der geschilderten Bewegungen ist erkennbar, dass es insoweit nur auf die Relativbewegung zwischen den Teilstempeln 2 und 3 ankommt. Dadurch wird das Ablösen des Überzugs 7 bereichsweise nacheinander in Schritten durchgeführt. In jedem Schritt ist nur ein Teil der gesamten Ablösekraft zu überwinden. Dies ist für besonders empfindliche Überzüge 7 bzw. Hohlkörper 16 sinnvoll anwendbar, insbesondere dann, wenn die Überzüge nur eine geringe Wanddicke besitzen und/oder aus sehr empfindlicher Süßwarenmasse bestehen.

Die Unterlage 21 kann, wenn sie beispielsweise von einem zwischen Umlenkrollen aufgespannten Förderband besteht, bis zu gewissem Grade elastisch nachgiebig ausgebildet sein. Dies ist bereits beim Absetzen von Hohlkörpern 16 auf der Unterlage 21 gemäß dem Ausführungsbeispiel der Fig. 5 bis 8 vorteilhaft. Eine solche federnd nachgiebige Unterlage 21 kann jedoch auch mit Vorteil mit einer Ausführungsform kombiniert werden, wie sie die Fig. 1 bis 4 zeigen, also eine Ausführungsform, bei der ein Löseschritt durch einen Druckluftimpuls erfolgt. Dabei ist insbesondere der praxisbezogene Fall zu betrachten, bei welchem an einer Vielzahl von Stempeln in einem Feld ein durch Druckluft bewirkter Löseschritt an allen Stempeln des Feldes verlässlich durchgeführt werden muss. Dieser Löseschritt wird sich dann so zeitlich gestalten und an den einzelnen Stempeln durchaus auch etwas zeitversetzt gegeneinander ablaufen. Durch die elastisch nachgiebige Unterlage 21, die gleichsam wie ein Federkissen wirkt, können die feinen Öffnungen 15 in dem Teilstempel 2 zumindest gedrosselt verschlossen gehalten werden, und zwar auch an solchen Stempeln, an denen sich der jeweilige Überzug 7 im Bereich des Teilstempels 2 bereits gelöst hat. Dadurch tritt gleichsam ein Verschließen der Austrittsöffnungen 15 an dem betreffenden Teil der Stempel ein, so dass sich der Druck auch an den anderen Stempeln aufbauen und auswirken kann, an denen der zweite Löseschritt noch aussteht und dann zeitverzögert abläuft. Auf diese Weise wird eine hohe Betriebssicherheit erzielt, alle Überzüge 7 von allen Stempeln an dem Formblock 1 verlässlich zu lösen. Dies ist besonders bedeutungsvoll für eine ungestörte kontinuierliche wirtschaftliche Herstellung der Hohlkörper 16.

### BEZUGSZEICHENLISTE

- 1: Formblock
- 2: Teilstempel
- 3: Teilstempel
- 4: Doppelpfeil
- 5: Oberfläche
- 6: Oberfläche
- 7: Überzug
- 8: Teilungsfuge
- 9: Kanal
- 10: Boden

- 11: Wandung
- 12: Tropfen
- 13: Pfeil
- 14: Kanal
- 15: Austrittsöffnungen
- 16: Hohlkörper
- 17: Anschlag
- 18: Anschlag
- 19: Doppelpfeil
- 20: Pfeil

- 21: Unterlage
- 22: Pfeil
- 23: Pfeil

## Patentansprüche

1. Verfahren zur Herstellung schalenartiger Hohlkörper (16) aus Süßwarenmasse, insbesondere Schokolademasse, indem eine Vielzahl gekühlter Stempel in ein Bad flüssiger temperierter Süßwarenmasse abgesenkt und über die Oberfläche des Bades wieder angehoben wird, die an der benetzten Oberfläche jedes Stempels haftende Süßwarenmasse dabei zumindest teilweise zu einem schalenartigen Überzug (7) verfestigt wird, und der Überzug (7) von dem Stempel gelöst und als Hohlkörper (16) abgegeben wird, **dadurch gekennzeichnet, dass** ein im Bereich des sich bildenden Überzugs (7) mindestens in zwei Teilstempel (2; 3) geteilter Stempel in einer ersten Relativlage seiner Teilstempel (2; 3) in das Bad abgesenkt und angehoben wird, und dass zum teilweisen Lösen des mindestens teilweise verfestigten Überzugs (7) von dem Stempel die Teilstempel (2, 3) relativ zueinander in eine zweite Relativlage bewegt werden, wobei zunächst die Haftung des Überzuges (7) nur zu einem der Teilstempel (3 oder 2) und zeitversetzt zu dem anderen der Teilstempel (2 oder 3) aufgehoben wird.

2. Verfahren nach Anspruch 1, **dadurch gekennzeichnet, dass** zum teilweisen Lösen des Überzuges (7) von dem Stempel ein unter Druck stehendes Gas in der betreffenden Oberfläche eines Teilstempels (2) zur Ausströmung gebracht wird..

3. Verfahren nach mindestens einem der Ansprüche 1 bis 2, **dadurch gekennzeichnet, dass** der Stempel mit dem Überzug (7) auf eine Unterlage (21) abgesenkt wird, aus dieser Stellung der dem Randbereich des Hohlkörpers (16) zugeordnete Teilstempel (3) angehoben wird, und das vollständige Lösen des Überzuges (7) von dem Stempel unter Gegendruck der Unterlage (21) erfolgt.

4. Vorrichtung zur Herstellung schalenartiger Hohlkörper (16) aus Süßwarenmasse, insbesondere Schokolademasse, mit einer Vielzahl gekühlter Stempel, einem Bad flüssiger temperierter Süßwarenmasse, einem steuerbaren Antrieb für eine Vertikalbewegung der Stempel relativ zu dem Bad flüssiger temperierter Süßwarenmasse, und einem von einem Kühlmedium durchflossenen Kanal (9) für die Kühlung der Stempel, insbesondere nach einem der Ansprüche 1 bis 3, **dadurch gekennzeichnet, dass** jeder Stempel in mindestes zwei Teilstempel (2, 3) unterteilt ist, und dass eine Einrichtung zur Bewegung der mindestens zwei Teilstempel (2, 3) aus einer ersten Relativlage in eine zweite Relativlage und zurück vorgesehen ist.

5. Vorrichtung nach Anspruch 4, **dadurch gekennzeichnet, dass** in einem der Teilstempel (2) ein in seiner dem Überzug (7) zugeordneten Oberfläche (5) endender Kanal (14) vorgesehen ist, der zum Zwecke der Teillösung des Überzugs (7) von dem Teilstempel (2) mit einem unter Druck stehenden Gas beaufschlagbar ist.

6. Vorrichtung nach mindestens einem der Ansprüche 4 bis 5, **dadurch gekennzeichnet, dass** an den Teilstempeln (2, 3) die Relativbewegung begrenzende Anschläge (17, 18) vorgesehen sind.

7. Vorrichtung nach mindestens einem der Ansprüche 4 bis 6, **dadurch gekennzeichnet, dass** der Stempel mit einer im Übergangsbereich zwischen einem Boden (10) und einer Wandung (11) des Überzugs (7) angeordneten Teilungsfuge (8) in die zwei Teilstempel (2, 3) unterteilt ist.

8. Vorrichtung nach mindestens einem der Ansprüche 4 bis 7, **dadurch gekennzeichnet, dass** jeder Stempel in die mindestens zwei Teilstempel (2, 3) derart unterteilt ist, dass die Teilstempel (2, 3) durch die Einrichtung in vertikaler Richtung zueinander relativbeweglich sind.

9. Vorrichtung nach mindestens einem der Ansprüche 4 bis 8, **dadurch gekennzeichnet, dass** eine federnd nachgiebige Unterlage (21) zum Lösen der Überzüge (7) von den Stempeln und zu ihrer Aufnahme vorgesehen ist.

10. Vorrichtung nach mindestens einem der Ansprüche 4 bis 8 und 9, **dadurch gekennzeichnet, dass** der steuerbare Antrieb für die Vertikalbewegung der Stempel relativ zu dem Bad flüssiger temperierter Süßwarenmasse auch für eine Vertikalbewegung der Teilstempel (2,3) relativ zu der Unterlage ausgebildet ist.

## Claims

1. A method for producing hollow shell-like bodies (16) of confectionery mass, especially chocolate mass, wherein a plurality of cooled moulds are dipped in a bath of molten confectionery mass and again lifted above the level of the bath, the confectionery mass adhering to the wetted surface of each mould is at least partially hardened to form a shell-like coating (7), and the shell-like coating (7) is separated from the mould and an hollow body (16), **characterized in that** a mould being split at least in two partial moulds (2, 3) in the area of the generating coating (7) is dipped in a first relation of the two partial moulds (2, 3) in the bath and lifted, and **in that** the partial moulds (2, 3) are moved afterwards in a second relation to each other for partial loosening the at least partially hardened coating (7) from the mould, wherein at first the bond of the coating (7) to one of the two partial moulds (3 or 2) is loosened and afterwards the bond to the other partial mould (2 or 3) is loosened.

2. The method of claim 1, **characterized in that** a gas under pressure is emitted from the respective surface of the partial mould (2) in order to partially loosen the coating (7) from the mould.

3. The method of at least one of the claims 1 and 2, **characterized in that** the mould carrying the coating (7) is lowered to a support (21), in which position the partial mould (3) assigned to the rim of the hollow body (16) is lifted, and **in that** the complete loosening of the coating (7) takes place under the counter pressure of the support (21).

4. An apparatus for producing hollow shell-like bodies (16) of confectionery mass, especially chocolate mass, including a plurality of cooled moulds, a bath of tempered molten liquid confectionery mass, a controlled drive for a vertical movement of the moulds with respect to the bath of the tempered molten liquid mass, and a channel (9) passed by a cooling medium for cooling the moulds, especially according of one of the claims 1 to 3, **characterized in that** each mould is split in at least two partial moulds (2, 3), and **in that** a drive unit is provided to move the at least two partial moulds (2, 3) from a first relation of each other in a second relation to each other and reverse.

5. The apparatus of claim 4, **characterized in that** a channel (14) is located in one of the partial moulds, the channel ending in the surface (5) of the mould being assigned to the coating (7) and being impinged of a gas under pressure for partially loosening the coating (7) from the partial mould (2).

6. The apparatus of at least one of the claims 4 to 5, **characterized in that** stops (17, 18) are arranged on the partial moulds (2, 3) to limit the relative movement.

7. The apparatus of at least one of the claims 4 to 6, **characterized in that** the mould is split in two partial moulds (2, 3) with a separating gap (8), the gap being positioned in the transition area between the bottom (10) and the wall (11) of the coating (7).

8. The apparatus of at least one of the claims 4 to 7, **characterized in that** each mould is split in at least two partial moulds (2, 3) in a way that the partial moulds (2, 3) may be moved by the drive unit in vertical direction to each other.

9. The apparatus of at least one of the claims 4 to 8, **characterized in that** a resilient support (21) is arranged for loosening the coatings (7) from the moulds and for receiving the coatings.

10. The apparatus of at least one of the claims 4 to 8 and 9, **characterized in that** the controllable drive for the vertical movement of the moulds with respect to the bath of liquid tempered confectionery mass is designed for the vertical movement of the partial moulds (2, 3) with respect to the support also.

## Revendications

1. Procédé de fabrication de corps creux (16) en forme de coquille, à partir d'une masse de matière sucrée, notamment une masse de chocolat, dans lequel plusieurs poinçons de moulage refroidis sont plongés dans un bain de masse de matière sucrée liquide tempérée et soulevés à nouveau au-dessus de la surface du bain, la masse de matière sucrée adhérant à la surface mouillée de chaque poinçon de moulage est solidifiée au moins en partie en un revêtement (7) en forme de coquille et ledit revêtement (7) est décollé du poinçon de moulage et distribué en tant que corps creux (16), **caractérisé en ce qu'**un poinçon de moulage, divisé en au moins deux parties (2, 3) dans la zone de formation du revêtement (7), est plongé dans le bain dans une première position relative de ses parties (2, 3) puis soulevé et **en ce que** pour le décollement partiel du revêtement (7) au moins en partie solidifié du poinçon de moulage, les parties de poinçon de moulage (2, 3) sont déplacées relativement l'une à l'autre dans une seconde position relative, l'adhérence du revêtement (7) n'étant éliminée tout d'abord que sur l'une des parties de poinçon (3 ou 2) puis, avec un décalage dans le temps, sur l'autre des parties de poinçon (2 ou 3).

2. Procédé selon la revendication 1, **caractérisé en ce que**, pour décoller partiellement le revêtement (7) d'avec le poinçon de moulage, un gaz sous pression est amené dans la surface correspondant à une partie de poinçon (2) pour en jaillir.

3. Procédé selon au moins une des revendications 1 et 2, **caractérisé en ce que**, le poinçon de moulage pourvu du revêtement (7) est abaissé sur un support (21), qu'à partir de cette position la partie de poinçon (3) correspondant à la zone de bordure du corps creux (16) est soulevée et que le décollement complet du revêtement (7) d'avec le poinçon de moulage s'effectue au moyen de la contre pression du support (21).

4. Dispositif de fabrication de corps creux (16) en forme de coquille, à partir d'une masse de matière sucrée, notamment une masse de chocolat, comportant une pluralité de poinçons de moulage refroidis, un bain de masse de matière sucrée liquide tempérée, un entraînement commandable pour le mouvement vertical des poinçons de moulages par rapport à la masse de matière sucrée tempérée et un canal (9) parcouru par un liquide de refroidissement pour refroidir les poinçons de moulage notamment selon l'une des revendications 1 à 3, **caractérisé en ce que** chaque poinçon de moulage est divisé en au moins deux parties de poinçon (2, 3) et **en ce qu'**il est prévu un dispositif pour le mouvement des au moins deux parties de poinçon (2, 3) à partir d'une première position relative vers une seconde position relative et retour.

5. Dispositif selon la revendication 4, **caractérisé en ce qu'**il est prévu, dans l'une des parties de poinçon (2), un canal (14) débouchant sur sa surface (5) correspondant au revêtement (7), qui peut être exposé à un gaz sous pression pour le décollage partiel du revêtement (7) d'avec la partie de poinçon (2).

6. Dispositif selon au moins une des revendications 4 à 5, **caractérisé en ce que** des butées (17, 18) sont prévues sur les parties de poinçon (2, 3) pour en limiter le mouvement relatif.

7. Dispositif selon au moins une des revendications 4 à 6, **caractérisé en ce que** le poinçon de moulage est divisé en deux parties (2, 3) avec un joint de séparation (8) disposé dans la zone de transition entre le fond (10) et une paroi (11) du revêtement (7).

8. Dispositif selon au moins une des revendications 4 à 7, **caractérisé en ce que** chaque poinçon de moulage est subdivisé en lesdites au moins deux parties de poinçon de façon telle que les parties de poinçon (2,3) soient verticalement déplaçables relativement l'une à l'autre par le dispositif.

9. Dispositif selon au moins une des revendications 4 à 8, **caractérisé en ce qu'**il est prévu un support (21) pour décoller le revêtement (7) d'avec le poinçon et pour le recevoir.

10. Dispositif selon au moins une des revendications 4 à 8 et 9, **caractérisé en ce que** l'entraînement commandable pour le mouvement vertical des poinçons de moulage relativement au bain de masse de matière sucrée liquide tempérée est aussi configuré pour le mouvement vertical des parties de poinçon (2,3) relativement l'une à l'autre.
